**Europäisches Patentamt**

**European Patent Office**

**Office européen des brevets**

(11) Veröffentlichungsnummer: **0 351 523 B1**

# EUROPÄISCHE PATENTSCHRIFT

(45) Veröffentlichungstag der Patentschrift: **19.11.92**

(51) Int. Cl.⁵: **F02K 9/68**

(21) Anmeldenummer: **89109795.8**

(22) Anmeldetag: **31.05.89**

(54) **Hochleistungstriebwerk.**

(30) Priorität: **16.07.88 DE 3824160**

(43) Veröffentlichungstag der Anmeldung:
**24.01.90 Patentblatt 90/04**

(45) Bekanntmachung des Hinweises auf die
Patenterteilung:
**19.11.92 Patentblatt 92/47**

(84) Benannte Vertragsstaaten:
**FR GB IT**

(56) Entgegenhaltungen:
**WO-A-88/03249**
**DE-A- 3 128 735**
**DE-A- 3 314 326**
**GB-A- 2 153 913**
**US-A- 4 730 449**

**JOURNAL OF SPACECRAFT AND ROCKETS,
Band 20, Nr. 2, März/April 1983, Seiten
178-181, American Institute of Aeronautics
and Astronautics, Inc., New York, US; H.D.
SCHMITZ et al.: "Augmented electrothermal
hydrazine thruster development"**

(73) Patentinhaber: **ERNO Raumfahrttechnik Gesellschaft mit beschränkter Haftung
Hünefeldstrasse 1-5
W-2800 Bremen 1(DE)**

(72) Erfinder: **Steenborg, Manfred
Buchenhügel 26
W-2863 Ritterhude-Ihlpohl(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Hochleistungstriebwerk gemäß dem Oberbegriff des Patentanspruches 1.

Bei derartigen Triebwerken wird als Treibstoff vor allem Hydrazin verwendet, das unter starker Wärmeentwicklung zersetzt wird, wobei die bei der Zersetzung erzeugten Treibgase beim Ausströmen durch die Düse für den Schub sorgen. Es besteht das Problem Vergrößerung des erreichbaren Schubes der Treibgase durch deren weitere Erwärmung zu erzielen.

So ist aus der DE-OS 31 28 735 ein Triebwerk bekannt, bei dem vor der Düse eine Aufheizeinrichtung vorgesehen ist, die aus einem metallischen Rohr besteht, das durch direkten Stromdurchgang aufgeheizt wird. Das Rohr ist in Form einer Längsspirale ausgebildet, wobei das Treibgas aus einer vorgeordneten Zersetzungskammer zunächst die isolierte Außenseite der Aufheizvorrichtung überstreicht und dann nahe der Düse in das Rohr eintritt. Die durch das Rohr weiter erhitzten Treibgase gelangen dann schließlich durch eine zentrische Leitung zu der Düse.

Nachteilig bei dieser Ausgestaltung der Aufheizvorrichtung ist, daß das als Wärmetauscher fungierende Rohr selbst stromführend und überdies nur als einziges Heizelement vorgesehen ist. Bei seinem Ausfall kommt es somit zu einer erheblichen Leistungsminderung.

Ungünstig ist bei diesem bekannten Triebwerk ferner, daß das Rohr aufgrund seiner Spiralform und der maximal auftretenden Temperaturen bis zu 2300° C auf den Werkstoff Rhenium beschränkt ist. Diese vorbekannte Konzeption erlaubt weder eine räumliche Modifikation zur Anpassung an besondere Gegebenheiten, insbesondere hinsichtlich der Minimierung, noch eine wesentliche Schubvergrößerung durch eine weitere Erhitzung der Treibgase.

Daneben ist aus der US-A 4 730 449 ein Triebwerk gemäß dem Oberbegriff des Patentanspruchs 1 bekannt geworden, bei dem im Zentrum einer zylindrischen Aufheizeinrichtung in einem Hohlraum mehrere Heizwicklungen angeordnet sind, die mittels Wärmestrahlung die den Hohlraum umgebenden Wandflächen aufheizen. Von diesen gelangt die Wärme zu Ringkanälen, die die zentrale Aufheizkammer schraubenförmig umgeben und die vom Treibstoff bzw. den Treibgasen durchströmt werden. Auch bei diesem bekannten Triebwerk sind der Möglichkeit zur weiteren Steigerung des Schubes durch die Erwärmung der Treibgase enge konstruktive Grenzen gesetzt.

Der Erfindung liegt die Aufgabe zugrunde, ein Hochleistungstriebwerk der gattungsgemäßen Art derart weiterzubilden , daß zuverlässig erhöhte spezifische Impulse erreicht werden.

Erfindungsgemäß ist diese Aufgabe durch die im Patentanspruch 1 gekennzeichneten Merkmale gelöst.

Bevorzugte Merkmale, die die Erfindung vorteilhaft weiterbilden, sind den nachgeordneten Patentansprüchen zu entnehmen.

Aufgrund dar erfindungsgemäßen Ausgestaltung des Hochleistungstriebwerkes wird in vorteilhafter Weise die Tatsache genutzt, daß eine von außen in eine flache Spirale einströmender Gas- oder Flüssigkeitsstrom auf seinem Weg in das Zentrum dieser Spirale in eine immer rascher Rotationsbewegung versetzt wird, wodurch sich eine gut an den Kanalwänden anliegende Strömung mit dem Vorteil einer hervorragenden Wärmeübertragung und einer daraus resultierenden deutlichen Impulssteigerung ergibt.

Das Triebwerk selbst kann im Hinblick auf die kleineren Abmessungen der Aufheizeinrichtung kompakt ausgebildet sein, wobei gleichzeitig eine gute Vibrationssteifigkeit gegeben ist und eine sehr gute Isolierung vorgesehen werden kann. Der Aufbau eines derart ausgebildeten Hochleistungstriebwerkes ist einfach und aufgrund der durch den direkten, wärmeleitenden Kontakt der Widerstandsheizelemente mit der Gasführungseinrichtung erreichten Wärmeübertragungsverhältnisse, insbesondere hinsichtlich der Oberfläche und der Wärmeleitungswirkung der Gasführungseinrichtung selbst, läßt sich eine weitere deutliche Leistungssteigerung des Triebwerkes gegenüber herkömmlicher Anordnungen erzielen.

Die Gasführungseinrichtung besteht vorteilhaft aus einem bruch- und hitzefestem Material, wie beispielsweise Carbon oder ein Metall wie Rhenium-Wolfram-Rhenium, MoR, sowie für eine oxidierende Umgebung, beispielsweise aus Rhodium, Iridium, Ruthenium oder Platin oder deren Legierungen. Bevorzugt besteht die Gasführungseinrichtung aus Boronnitrid, das beispielsweise gegenüber Rhenium den Vorteil einer leichteren Herstellbarkeit und einer höheren Temperaturverträglichkeit besitzt.

Die Gasführungseinrichtung ist nach einer bevorzugten Ausgestaltung zwischen wenigstens zwei flächigen Heizelementen angeordnet. Hierdurch ist in vorteilhafter Weise eine gleichmäßige und großflächige Wärmeübertragung gewährleistet.

Vorzugsweise ist die Aufheizeinrichtung modular aufgebaut und besteht bevorzugt wenigstens aus zwei Heizelementmodulen und wenigstens einem dazwischen passenden Gasführungsmodul. Damit läßt sich in vorteilhafter Weise eine räumliche und leistungsmäßig Anpassung erreichen.

Wenn zwischen zwei Heizelementmodulen zwei Gasführungsmodule angeordnet sind, ist es u.a. herstellungstechnisch vorteilhaft, wenn wenigstens ein Gasführungsmodul einen flach- oder längsspiraligen Kanal aufweist. Dieser Kanal wird in vorteilhafter Weise von dem komplementären Gasführungsmodul entweder glatt oder mit anschließender Formergänzung abgeschlosssen.

In einer alternativen Ausgestaltung der Erfindung weist die Aufheizeinrichtung statt eingängiger Heizelement- und Gasführungsmodule wenigstens zwei zueinander passende kombinierte Heizelement-Gasführungsmodule mit wenigstens hälftig gebildeten Gasführungskanälen auf. Die vorgesehenen elektrischen Widerstandsheizelemente können dabei in günstiger Weise entweder jeweils einem Modul und beiden gleichzeitig zugeordnet sein.

Bei der Ausgestaltung der Aufheizeinrichtung mit modularen Heizelementen weist jedes Heizelement eine auf Keramikbasis aufgedampfte Karbon-Heizspur auf, welche vorzugsweise mit pyrolytischem Boronnitrid versiegelt ist.

Bei einer Ausbildung der Aufheizeinrichtung mit kombinierten Heizelement-Gasführungsmodulen besteht jedes Heizelement aus Heizdrähten, die von benachbarten Gasführungen gleichmäßig beabstandet und ebenfalls in das Modul integriert sind.

Die Aufheizvorrichtung ist in vorteilhafter Weise temperarturabhängig und/oder gasmengenabhängig steuerbar. Hierdurch ist keine zusätzliche Regelelektronik erforderlich.

Ausführungsbeispiele der Erfindung sind in den Zeichnungen schematisch dargestellt. Es zeigen:

Fig. 1  einen Teilschnitt eines ersten Ausführungsbeispieles eines Hochleistungstriebwerkes;

Fig. 2  einen Schnitt gemäß Linie II-II der Fig. 1;

Fig. 3  einen Teilschnitt eines zweiten Ausführungsbeispiels eines Hochleistungstriebwerkes;

Fig. 4  eine Variante eines Gasführungsmoduls;

Fig. 5  ein weiteres Ausführungsbeispiel einer Aufheizeinrichtung für ein Hochleistungstriebwerk und

Fig. 6  ein letztes Ausführungsbeispiel einer Aufheizeinrichtung für ein Hochleistungstriebwerk.

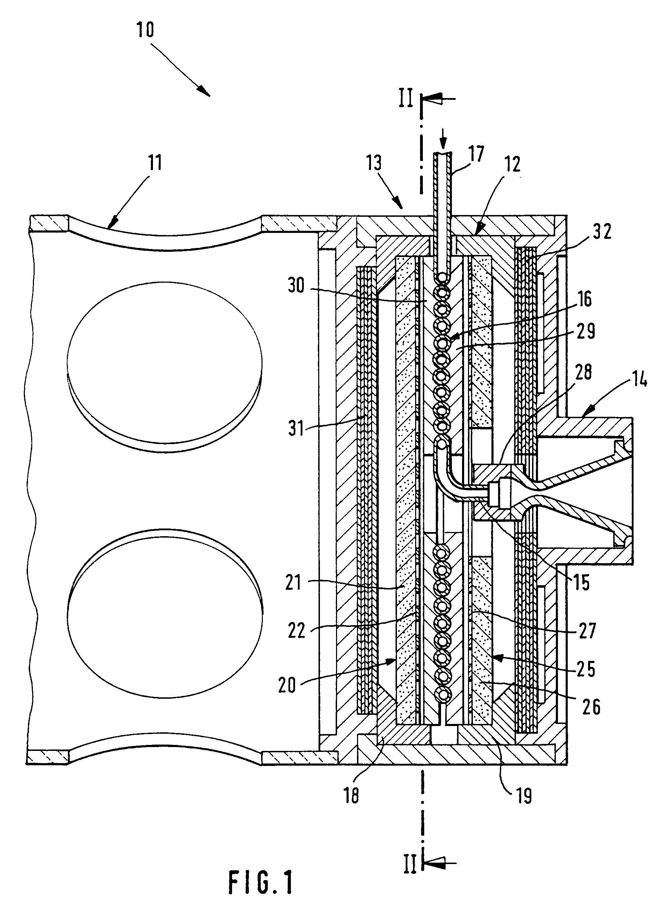

In Fig. 1 ist ein Schnitt durch den hinteren Teil eines Hochleistungstriebwerkes 10 dargestellt. Von dem Triebwerksgehäuse ist ein Hitzeschild 11 gezeigt, an das sich eine Aufheizeinrichtung 12 anschließt, das in einem Gehäuseabschnitt 13 des Hochleistungsgetriebes 10 angeordnet ist. Den Abschluß des Hochleistungstriebwerkes 10 bildet eine Düsenanordnung 14, die mit dem Auslaßende 15 einer Gasführung 16 verbunden ist. Treibgas tritt in die Gasführung 16 über ein Einlaßende 17 ein, das sich durch den Gehäuseteil 13 nach außen erstreckt.

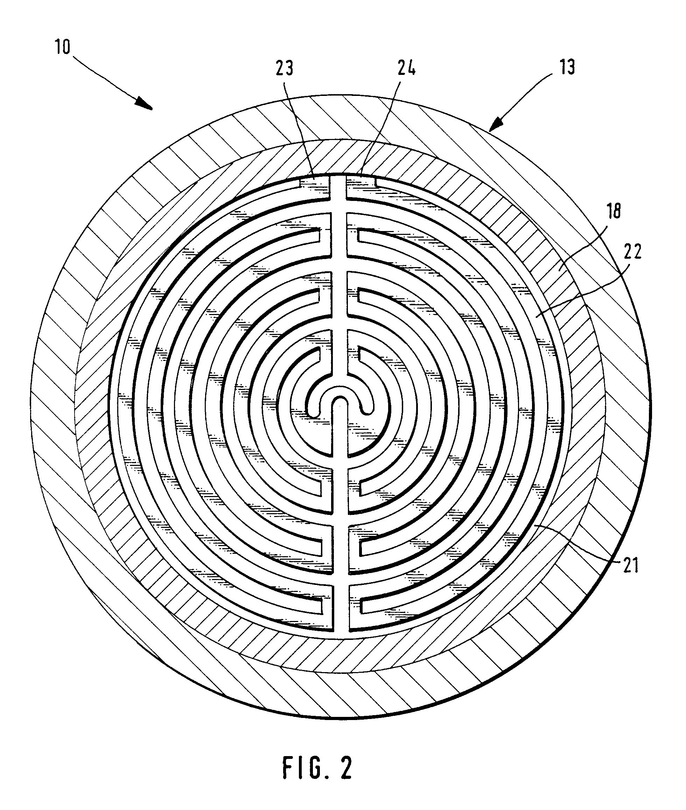

Die Aufheizeinrichtung 12 weist einen Winkelring 18 und einen Winkelring 19 auf, die randseitig an dem Gehäuseteil 13 des Hochleistungstriebwerkes 10 anliegen und jeweils aus pyrolytischem Boronnitrid hergestellt sind. Der Winkelring 18 umfaßt ein scheibenförmiges elektrisches Heizelement 20, das aus einer Keramikscheibe 21 besteht, auf die eine Carbon-Heizspur 22 aufgedampft ist. Die Ausbildung der aufgedampften Heizspur 22 mit der halbkreisförmigen Leiterverteilung ist in Fig. 2 deutlich zu erkennen. Die in der Mitte verbundenen Leiterspuren münden in Fig. 2 an der oberen Seite bei 23 und 24, wo nicht dargestellte elektrische Anschlußleitungen angeschlossen sind. Eine nicht dargestellte Gleichstromquelle ist über eine ebenfalls nicht dargestellte temperatur- oder/und treibgasmengenabhängige Steuerung mit der Heizspur 22 beispielsweise so verbunden, daß bei eingeschalteter Heizung der Minuspol am Spurende 23 und der Pluspol am Spurende 24 liegt.

Der Winkelring 19 umgreift ein im wesentlichen gleich aufgebautes Heizelement 25, das eine ringförmige Keramikscheibe 26 aufweist, auf der eine ringförmige Heizspur 27 aus Karbon aufgedampft und mit pyrolytischem Boronnitrid versiegelt ist. Das elektrische Heizelement 25 besitzt im Gegensatz zu dem elektrischen Heizelement 20 eine kreisförmige mittige Ausnehmung, die das Auslaßende 15 der Gasführung 16 in einen Ansatz 28 der Düsenanordnung 14 greift.

Zwischen dem elektrischen Heizelement 20 und dem elektrischen Heizelement 25 sind sandwichartig eine Zwischenplatte 29 und eine Zwischenplatte 30 aus pyrolytischem Boronnitrid mit einem flachspiralig ausgebildeten Kanal für die Gasführung 16 angeordnet. Der flachspiralige Führungskanal für die Gasführung wird dabei teilweise von den Zwischenplatten 29 und 30 gebildet, wobei bei dem in Fig. 1 dargestellten Ausführungsbeispiel als Gasführungselement ein Rohr vorgesehen ist.

Seitlich begrenzt wird die Aufheizeinrichtung 12 durch eine Tantalfolienanordnung 31 und eine Tantalfolienanordnung 32, aber es sind auch andere Folien zur Isolierung möglich.

Die Aufheizeinrichtung ist modular aufgebaut. Zwischen den als Heizmodule dienenden elektrischen Heizelementen 25 und 20 sind die als Gasführungsmodule dienende Zwischenplatten 29 und 30 angeordnet.

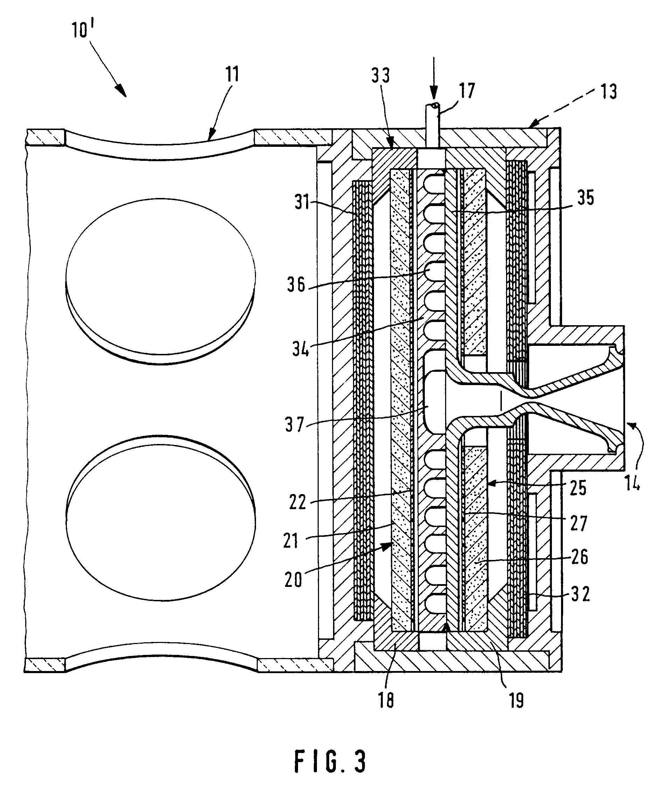

Bei dem in Fig. 3 dargestellten Ausführungsbeispiel eines abgewandelten Hochleistungstriebwerkes 10' sind gleiche Funktionsteile mit denselben Bezugszeichen versehen und nachfolgend werden nur die Unterschiede bei der Ausgestaltung der Aufheizeinrichtung 33 näher erläutert. Zwischen den scheibenförmigen elektrischen Heizelementen 20 und 25 sind statt der Zwischenplatten 29 und 30 aus pyrolytischem Boronnitrid nunmehr eine Gasführungsplatte 34 und eine Düsenplatte 35 aus schweiß- oder lötbarem Keramikwerkstoff aneinanderliegend angeordnet und randseitig mittels Schweißung verbunden. In der Gasführungsplatte 34 ist ein flachspiralförmiger Gaskanal 36 gebildet, der einen U-förmigen Querschnitt aufweist und von der Düsenplatte 35 abgedeckt ist. Durch den Gaskanal 36 wird Treibgas, das von außen durch das Einlaßende 17 in nicht dargestellter Weise in die Mündung des äußeren Ende des Gaskanals 36 eintritt, spiralförmig zu einem Düsenvorraum 37 geleitet und tritt dann durch die Düsenanordnung 14 aus. Diese in Fig. 3 dargestellte Ausbildungsform ermöglicht eine rohrlose Gasführung durch herstellungsgünstige und im Hinblick auf die Temperaturstabilität vorteilhafte Bildung in einer Gasführungsplatte aus schweiß- oder lötbarem Keramikwerkstoff.

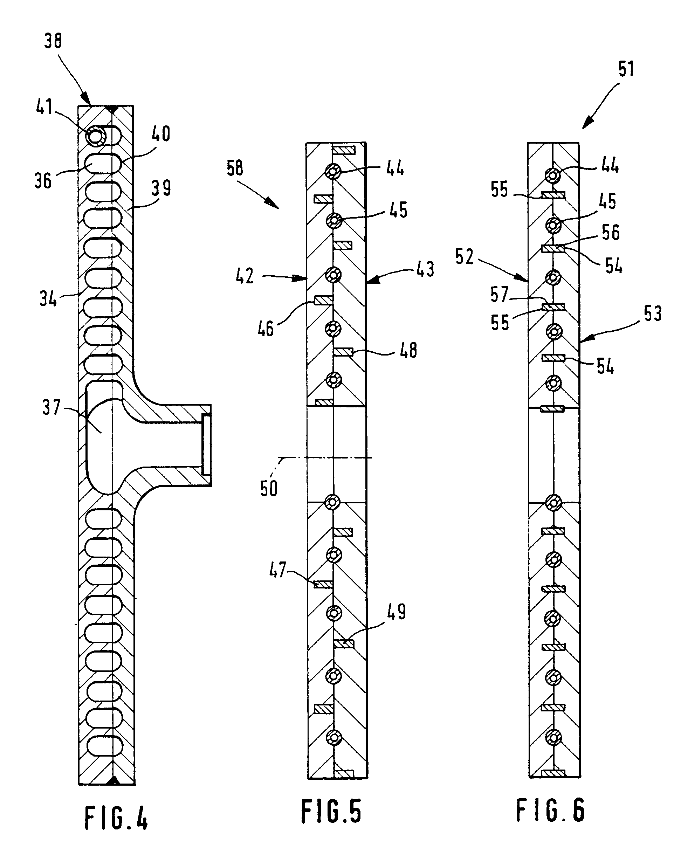

Eine Abwandlung der in Fig. 3 dargestellten Aufheizeinrichtung ist in Fig. 4 gezeigt und mit 38 bezeichnet. Auch hier sind die Gasführungsplatte 34 und eine multiplizierte Düsenplatte 39 aneinander liegend angeordnet und randseitig mittels einer EB-Schweißung verbunden. Die Düsenplatte 39 besitzt abweichend von der Düsenplatte 35 zu den Kanälen 36 der Gasführungsplatte 34 komplimentär angeordnete und die Kanalform ergänzende Formabschnitte 40, die einen größeren Durchtrittsquerschnitt für die Gasführung ermöglichen. Der Einlaß wird über einen tangentialen Rohrstutzen 41 erreicht, der in der Gasführungsplatte 34 am Ende der flachspiraligen Gasführung eingelötet ist.

Der durch den Formabschnitt ergänzte Gasführungskanal 36 muß nicht gegenüber der Düsenplatte 39 absolut dicht sein. Eine dichte Ausbildung läßt sich am günstigsten durch Diffusionsschweißung sowie durch Hochtemperaturlötungen mit geeigneten Loten erzielen.

Die Gestaltung des Gaskanals 36 in der Gasführungsplatte 34 ermöglicht aufgrund der größeren Wärmeübergangsfläche eine Verbesserung des Wärmeübergangs von dem elektrischen Heizelement 20. Die Formabschnitte 40 liefern ebenfalls eine größere Wärmeübergangsfläche und verbessern damit die Wärmeübertragung von dem elektrischen Heizelement 25 auf das in dem Gaskanal 36 und 40 strömende Treibgas.

Fig. 5 zeigt eine weitere alternative Ausgestaltung einer Aufheizeinrichtung 41, die anstelle der bisherigen Aufheizeinrichtungen eingesetzt werden kann und die abweichend von den bisherigen Ausführungsbeispielen derartiger Aufheizeinrichtungen aus zwei zueinander passenden kombinierten Heizelement-Gasführungsmodulen 42 und 43 aufgebaut ist. Die Module 42 und 43 bilden jeweils hälftig durch komplimentäre flachspiralförmige Ausnehmungen einen sich von außen nach innen erstreckenden Gaskanal 44, in den ein gasführendes Rohr 45 eingebettet ist.

Das Heizelement-Gasführungsmodul 44 besitzt eine flach spiralförmige Nut 46, in der Heizdrähte 47 angeordnet sind. In gleicher Weise besitzt das Heizelement-Gasführungsmodul 43 flachspiralförmige Ausnehmungen 48, in denen Heizdrähte 49 angeordnet sind. Die Ausnehmungen 46 und 49 besitzen einen annähernd rechteckigen Querschnitt, sind jedoch in ihrer identischen flachspiralförmigen Ausbildung zueinander in eine Moduldrehung um 180° um die Mittelachse 50 versetzt. Die Nuten 46 und 48 haben jeweils von benachbarten Gasführungen den gleichen Abstand. Bei der Ausführungsform von Fig. 5 sind im Schnitt durch die Mittelachse 50 gesehen benachbarte Ausnehmungen 46 bzw. 48 doppelt so breit voneinander beabstandet wie benachbarte Gaskanäle 44.

Statt recheckiger Querschnitte können auch ovale, runde oder anders gestaltete Querschnitte der Ausnehmungen 46 bzw. 48 vorgesehen sein. Die Heizdrähte bestehen beispielsweise aus Rhenium, Wolfram, Molybdän, Iridium, Rhodium, Tantal oder Mischungen aus diesen Werkstoffen sowie aus Carbonband und/oder Carbongeflecht. Die Ausbildungsform von Fig. 5 hat neben einer guten Wärmeübertragungsfähigkeit auch eine gute Redundanzwirkung seitens der Heizelemente.

Fig. 6 zeigt eine Aufheizeinrichtung 51, bei der gegenüber der Ausbildungsform der Aufheizeinrichtung 41 in beiden Modulen Ausnehmungen 54 und 55 gebildet sind, die jeweils flachspiralig ausgebildet sind, wobei der Abstand der Ausnehmung 54 zu benachbarten Ausnehmungen 55 bzw. der Abstand einer Ausnehmung 55 zu benachbarten Ausnehmungen 44 gleich ist. In den Ausnehmungen 54 sind Heizdrähte 56 eines ersten Heizelementes und in den Ausnehmungen 55 sind Heizdrähte 57 eines zweiten Heizelementes angeordnet.

Auch die in den Figuren 5 und 6 dargestellten Aufheizeinrichtungen 41 und 51 sind nach einem modularen Konzept aufgebaut. Dieses Konzept ermöglicht die Gestaltung mit zwei oder mehreren aus je zwei Modulen bestehenden Einheiten, um beispielsweise eine größere Redundanz bei elektrischen Heizelementen und eine größere Oberfläche für die Gasführung zu erreichen. Vorteilhaft ist ein Aufbau aus mehreren derartigen Einheiten insbesondere dann, wenn die Gasdurchsatzrate und damit der Schub des Triebwerkes vergrößert werden soll.

Die in den Figuren dargestellten Heizelemente sind in nicht dargestellter Weise einzeln zu- und abschaltbar, ohne daß hierzu eine gesonderte Regelelektronik erforderlich ist. Die Steuerung erfolgt durch Ein- und Ausschalten temperaturabhängig und abhängig von Gasmengen. So sind für große Gasmengen beispielsweise alle Heizelemente zugeschaltet, während bei kleineren Gasmengen eine stufenweise Abschaltung der Heizelemente unter Beibehaltung der Abgastemperatur möglich ist.

**Patentansprüche**

1. Hochleistungstriebwerk, insbesondere zur Steuerung von Raumflugkörpern, mit einer Aufheizeinrichtung für zu einer Düse geleitete Treibgase, wobei die Aufheizeinrichtung wenigstens zwei elektrische Widerstandsheizelemente zur Wärmeübertragung auf eine in die Aufheizeinrichtung integrierte Gasführungseinrichtung aufweist, dadurch gekennzeichnet, daß die Gasführungseinrichtung (16,36,40,44,45) die Form einer flachen Spirale aufweist, bei der sich der Gaseinlaß (17) am äußeren Rand und der Gasauslaß (15) im Zentrum der Spirale befindet und die sich in direktem, wärmeleitendem Kontakt mit den Widerstandsheizelementen (22,24,47,49,56,57) befindet.

2. Triebwerk nach Anspruch 1, dadurch gekennzeichnet, daß die Gasführungseinrichtung (16, 36, 40,44,45) aus einem hoch temperaturfesten Metall oder einem kermischen Werkstoff besteht.

3. Triebwerk nach Anspruch 2, dadurch gekennzeichnet, daß die Gasführungseinrichtung (16,36,40,44,45) aus einem schweiß- und/oder lötbaren hochtemperaturbeständigen Keramikwerkstoff besteht.

4. Triebwerk nach einem der vorangehenden Ansprüche, dadurch gekennzeichnet, daß die Gasführungseinrichtung (16,36,40) zwischen wenigstens zwei flächigen Heizelementen (42,24) angeordnet ist.

5. Triebwerk nach einem der vorangehenden Ansprüche, dadurch gekennzeichnet, daß die Aufheizeinrichtung (14,33,41,51) modular aufgebaut ist.

6. Triebwerk nach Anspruch 5, dadurch gekennzeichnet, daß die Aufheizeinrichtung (12,33,38) wenigstens aus zwei Heizelementmodulen und wenigstens einem dazwischenpassenden Gasführungsmodul besteht.

7. Triebwerk nach Anspruch 6, dadurch gekennzeichnet, daß die Gasführungseinrichtung bei zwei zueinander passenden Gasführungsmodulen wenigstens ein Gasführungsmodul (34) aufweist, in dem ein flachspiraliger Kanal gebildet ist.

8. Triebwerk nach Anspruch 7, dadurch gekennzeichnet, daß der Kanal (36) durch den anschließenden Gasführungsmodul (39) mit einem Formabschnitt (40) ergänzt ist.

9. Triebwerk nach einem der Ansprüche 1 bis 5, dadurch gekennzeichnet, daß die Aufheizeinrichtung (41,51) wenigstens zwei zueinander passende kombinierte Heizelement-Gasführungs-Module (42,43,52,53) mit wenigstens hälftig gebildeten Gasführungskanälen (44) aufweist.

10. Triebwerk nach Anspruch 9, dadurch gekennzeichnet, daß die Heizelemente (47,49,56,57) jeweils einem oder gleichzeitig beiden Modulen zugeordnet sind.

11. Triebwerk nach einem der Ansprüche 1 bis 8, dadurch gekennzeichnet, daß jedes Heizelement (22,24) eine auf einer Keramikbasis aufgedampfte Carbon-Heizspur aufweist.

12. Triebwerk nach Anspruch 11, dadurch gekennzeichnet, daß die Carbon-Heizspur mit pyrolytischem Boronnitrid versiegelt ist.

13. Triebwerk nach Anspruch 9 oder 10, dadurch gekennzeichnet, daß jedes Heizelement (47,49,56,57) aus Heizdrähten besteht, die von benachbarten Gasführungen (44) gleichmäßig beabstandet und ebenfalls in das Modul (42,43,52,53) integriert sind.

14. Triebwerk nach einem der vorangehenden Ansprüche, dadurch gekennzeichnet, daß jede Aufheizeinrichtung (14,33,41,51) temperaturabhängig steuerbar ist.

15. Triebwerk nach einem der vorangehenden Ansprüche, dadurch gekennzeichnet, daß jede Aufheizeinrichtung (14,33,41,51) gasmengenabhängig steuerbar ist.

**Claims**

1. A high-powered propulsion unit, particularly for steering spacecraft, comprising a heater for propellant gases which are directed to a jet, wherein the heater has at least two electric resistance heating elements to transmit heat to a gas ducting means incorporated in the heater, characterized in that the gas ducting means (16, 36, 40, 44, 45) is in the form of a flat spiral, that the gas inlet (17) is at the outer edge of the spiral and the gas outlet (15) at the centre thereof, and that the spiral is in direct, heat-conducting contact with the resistance heating elements (22,24,47,49,56,57).

2. A propulsion unit of claim 1, characterised in that the gas ducting means (16,36,40,44,45) is made of a high temperature resistant metal or a ceramic material.

3. The propulsion unit of claim 2, characterised in that the gas ducting means (16,36,40,44,45) is made of a high temperature resistant ceramic material which can be welded and/or soldered.

4. The propulsion unit of any of the preceding claims, characterised in that the gas ducting means (16,36,40) is located between at least two flat heating elements (42,44).

5. The propulsion unit of any of the preceding claims, characterised in that the heater (14, 33, 41, 51) is of modular construction.

6. The propulsion unit of claim 5, characterised in that the heater (12,33,38) comprises at least two heating element modules and at least one gas-ducting module which fits between them.

7. The propulsion unit of claim 6, characterised in that, when there are two matching gas-ducting modules, the gas-ducting means has at least one gas-ducting module (34), in which a flat spiral passage is formed.

8. The propulsion unit of claim 7, characterised in that the passage (36) is completed by the adjoining gas-ducting module (39) with a moulded section (40).

9. The propulsion unit of any of claims 1 to 5, characterised in that the heater (41,51) has at least two matching, combined heating element/gas-ducting modules (42,43,52,53) with at least half-formed gas-ducting passages (44).

10. The propulsion unit of claim 9, characterised in that the heating elements (47,49,56,57) are each associated with one module or with both modules simultaneously.

11. The propulsion unit of any of claims 1 to 8, characterised in that each heating element (22,24) has a carbon heating track vapour-deposited on a ceramic base.

12. The propulsion unit of claim 11, characterised in that the carbon heating track is sealed with pyrolytic boron nitride.

13. The propulsion unit of claim 9 or 10, characterised in that each heating element (47,49,56,57) comprises heating wires, which are an equal distance away from adjacent gas ducts (44) and also incorporated in the module (42,43,52,53).

14. The propulsion unit of any of the preceding claims, characterised in that each heater (14,33,41,51) can be controlled dependent on temperature.

15. The propulsion unit of any of the preceding claims, characterised in that each heater (14,33,41,51) can be controlled dependent on the volume of gas.

**Revendications**

1. Moteur propulseur de forte puissance, notamment pour commander des engins spatiaux, comportant un dispositif de chauffage pour des gaz de propulsion fournis à une tuyère, le dispositif de chauffage comportant au moins deux éléments de chauffage à résistance électrique pour fournir de la chaleur à un dispositif de guidage de gaz intégré au dispositif de chauffage, moteur propulseur caractérisé en ce que le dispositif de guidage de gaz (16, 36, 40, 44, 45) a la forme d'une spirale plate dont l'entrée de gaz (17) se trouve au bord extérieur et dont la sortie de gaz (15) se trouve au centre de la spirale, cette dernière étant en contact direct de conduction thermique avec les éléments à résistance chauffante (22, 24, 47, 49, 56, 57).

2. Moteur propulseur selon la revendication 1, caractérisé en ce que le dispositif de guidage de gaz (16, 36, 40, 44, 45) est en un métal très réfractaire ou en une matière céramique.

3. Moteur propulseur selon la revendication 2, caractérisé en ce que le dispositif de guidage de gaz (16, 36, 40, 44, 45) est en une céramique très réfractaire susceptible d'être soudée et/ou brasée.

4. Moteur propulseur selon l'une des revendications précédentes, caractérisé en ce que le dispositif de guidage de gaz (16, 36, 40) est prévu entre au moins deux éléments chauffants (42, 24) plats.

5. Moteur propulseur selon l'une des revendications précédentes, caractérisé en ce que le dispositif de chauffage (14, 33, 41, 51) est de structure modulaire.

6. Moteur propulseur selon la revendication 5, caractérisé en ce que le dispositif de chauffage (12, 33, 38) se compose d'au moins deux modules d'éléments chauffants et d'au moins un module de guidage de gaz disposé entre les deux modules précédents.

7. Moteur propulseur selon la revendication 6, caractérisé en ce que le dispositif de guidage de gaz à deux modules de guidage de gaz adaptés l'un à l'autre comporte au moins un module de guidage de gaz (34) dans lequel est réalisé un canal en forme de spirale plate.

8. Moteur propulseur selon la revendication 7, caractérisé en ce que le canal (36) est complété par le module de guidage de gaz (39) adjacent avec une section de forme (40).

9. Moteur propulseur selon l'une des revendications 1 à 5, caractérisé en ce que le dispositif de chauffage (41, 51) se compose d'au moins deux modules de guidage de gaz à éléments chauffants (42, 43, 52, 53), combinés de manière à s'adapter ensemble avec des canaux de guidage de gaz (44) réalisés au moins pour moitié dans l'un des modules.

10. Moteur propulseur selon la revendication 9, caractérisé en ce que les éléments chauffants (47, 49, 56, 57) sont associés à l'un des deux modules ou simultanément aux deux modules.

11. Moteur propulseur selon l'une des revendications 1 à 8, caractérisé en ce que chaque élément chauffant (22, 24) comporte une trace de chauffage en carbone déposée à la vapeur sur une base de matière céramique.

12. Moteur propulseur selon la revendication 11, caractérisé en ce que la trace chauffante en carbone est scellée par du nitrure de bore, pyrolytique.

13. Moteur propulseur selon la revendication 9 ou 10, caractérisé en ce que chaque élément chauffant (47, 49, 56, 57) est formé de fils chauffants qui sont équidistants des moyens de guidage de gaz (44) voisins et sont également intégrés dans le module (42, 43, 52, 53).

14. Moteur propulseur selon l'une des revendications précédentes, caractérisé en ce que chaque dispositif de chauffage (14, 33, 41, 51) est commandé en fonction de la température.

15. Moteur propulseur selon l'une des revendications précédentes, caractérisé en ce que chaque dispositif de chauffage (14, 33, 41, 51) est commandé en fonction du débit de gaz.

FIG.1

FIG. 2

FIG. 3

FIG.4

FIG.5

FIG.6